Europäisches Patentamt

European Patent Office

Office européen des brevets

(11) Numéro de publication : **0 293 276 B1**

(12) **FASCICULE DE BREVET EUROPEEN**

(45) Date de publication du fascicule du brevet :
03.06.92 Bulletin 92/23

(51) Int. Cl.[5] : **C04B 35/64,** C04B 35/10,
G01N 27/00

(21) Numéro de dépôt : **88400992.9**

(22) Date de dépôt : **22.04.88**

(54) **Procédé de fabrication d'un substrat à forte résistivité, et application à une sonde d'analyse de gaz.**

(30) Priorité : **24.04.87 FR 8705831**

(43) Date de publication de la demande :
**30.11.88 Bulletin 88/48**

(45) Mention de la délivrance du brevet :
**03.06.92 Bulletin 92/23**

(84) Etats contractants désignés :
**DE ES IT SE**

(56) Documents cités :
**FR-A- 1 365 825**
**FR-A- 1 564 260**
**DESIGN ENGINEERING, Novembre 1977,**
**pages 79-82, Londres, GB; "Engineering cera-**
**mics-when to use them"**

(73) Titulaire : **THOMSON-CSF**
**51, Esplanade du Général de Gaulle**
**F-92800 Puteaux (FR)**

(72) Inventeur : **Kormann, René**
**THOMSON-CSF SCPI 19, avenue de Messine**
**F-75008 Paris (FR)**
Inventeur : **Loiseau, Raymond**
**THOMSON-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

EP 0 293 276 B1

Jouve, 18, rue Saint-Denis, 75001 PARIS

## Description

L'invention concerne un procédé de fabrication d'un substrat à forte résistivité, notamment un substrat en alumine. Un tel substrat est applicable dans une pile à électrolyte solide et notamment une sonde d'analyse de gaz, telle qu'une sonde à oxygène, pour obtenir un substrat présentant une bonne résistivité.

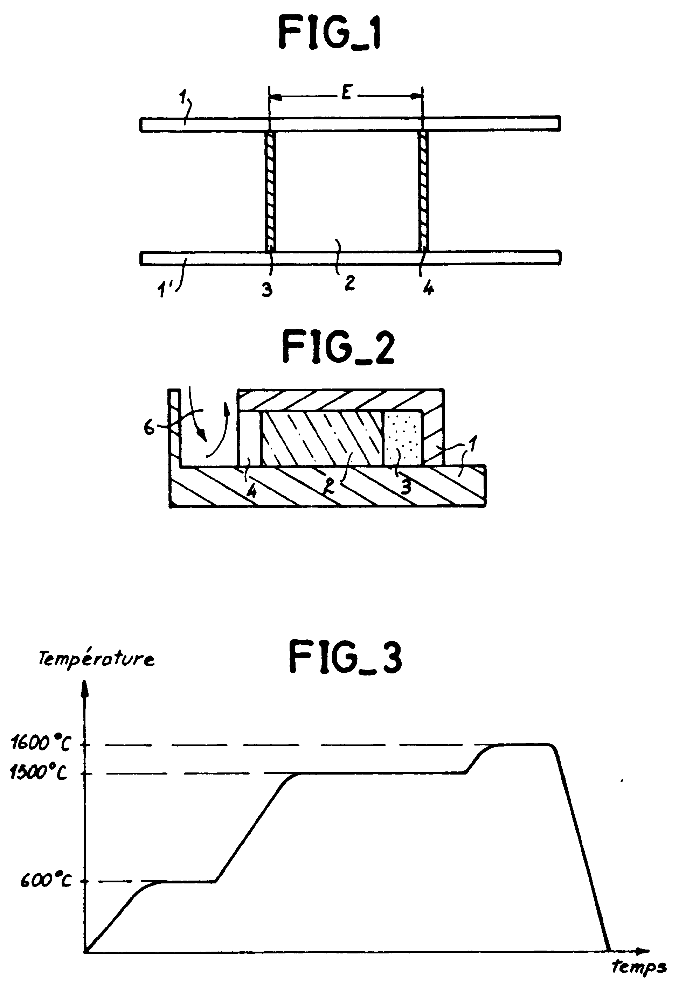

La dégradation de l'environnement par les pluies acides, l'incidence des gaz d'échappement sur la santé publique sont des facteurs amenant les gouvernements à promulguer des lois obligeant les industriels (constructeurs d'automobiles et utilisateurs de brûleurs) à diminuer par dix les rejets polluants par rapport à ce qui existait dans les années 70. Le moyen d'atteindre cet objectif est de placer dans le pot d'échappement un catalyseur oxydant le monoxyde et l'hydrure de carbone et réduisant le monoxyde de l'azote. Cependant, ce catalyseur ne peut fonctionner correctement que si les gaz ont une stoechométrie convenable, ce qui est réalisé en plaçant une sonde à oxygène contrôlant la composition des gaz et agissant en conséquence sur le rapport air-essence du dispositif d'injection. Le principe de fonctionnement de la partie nous intéressant, le capteur, est représenté figure 1, ce capteur comporte, entre deux pièces isolantes 1 et 1', un électrolyte 2, enserré entre deux électrodes 3 et 4. Ce capteur constitue une pile à électrolyte solide dont la tension est fonction des pressions partielles d'oxygène des gaz contenus dans les deux compartiments. Dans le cas de notre sonde, le potentiel d'une des électrodes est imposé par la présence d'un couple métal-métal oxydé, la tension aux bornes de la sonde n'est alors plus fonction que de la pression partielle d'oxygène du gaz environnant l'autre électrode.

Un tel capteur peut être fabriqué en utilisant les techniques avancées de la micro-électronique. Il est obtenu en sérigraphiant et frittant successivement sur un support isolant 1, tel que représenté en figure 2, une électrode de référence 3 en palladium par exemple, un électrolyte 2, une électrode de mesure 4. En fonctionnement, il apparaît une tension entre l'électrode de référence 3 et l'électrode de mesure 4 et si le substrat 1 n'est pas suffisamment résistif, un courant électronique va petit à petit oxyder le palladium de l'électrode de référence en oxyde de palladium selon les mécanismes suivants :

1) transfert à travers l'alumine, des électrons de l'électrode de référence vers l'électrode de mesure,

2) transfert à travers la zircone, d'ions oxygène de l'électrode de mesure vers l'électrode de référence Les réactions aux électrodes vont être :

– électrode référence : $Pd + O^2 + Pd^{2+} + + 2e^- + O^{2-}$ -PdO + 2e$^-$

– électrode de mesure $1/2\ O_2 + 2e^- - - - - - - - - - - - > O^{2-}$

Pour qu'un tel capteur fonctionne convenablement, il faut que la résistivité du support soit telle que le courant de fuite ne permette pas l'oxydation complète de l'électrode de référence avant au moins 1000 heures de fonctionnement, ce qui correspond approximativement, d'après la géométrie du capteur, à une résistivité électronique d'au moins $10^7 \Omega.cm$ à la température et aux pressions partielles d'oxygène de fonctionnement, c'est-à-dire à 800°C et entre $10^{-18}$ et $10^{-1}$ atmosphères de pression partielle d'oxygène.

C'est pourquoi l'invention concerne un procédé de réalisation d'un substrat à forte résistivité comprenant les différentes étapes suiccessives suivantes :

– une première étape de découpage d'au moins une plaquette de matériau céramique à base d'alumine ;

– une deuxième étape de traitement thermique à une première température pour obtenir une évaporation du matériau liant ;

– une troisième étape de recuit à une deuxième température supérieure à la première température pour obtenir un frittage conduisant à la densification du substrat ; caractérisé en ce que ce procédé est prolongé par une quatrième étape d'un recuit supplémentaire réalisé à une troisième température supérieure à la deuxième température ayant pour effet d'augmenter la résistance électrique du substrat.

L'invention concerne également une sonde d'analyse de gaz, caractérisée en ce qu'elle comporte un substrat réalisé selon le procédé précédent.

Les différents objets et caractéristiques de l'invention apparaîtront plus clairement dans la description qui va suivre faite à titre d'exemple non limitatif en se reportant aux figures annexées qui représentent :

– la figure 1, un exemple explicatif d'une sonde déjà décrite précédemment ;

– la figure 2, un exemple de réalisation d'une sonde à laquelle est applicable l'invention ;

– la figure 3, une courbe de températures illustrant le procédé de l'invention.

L'invention concerne un procédé de fabrication d'un substrat à forte résistivité.

De tels substrats sont utilisés dans des applications où une bonne isolation est requise notamment à haute température. Entre autres, on peut les utiliser comme support pour des capteurs électrochimiques tel que celui représenté en figure 1. Ces capteurs sont formés d'un conducteur ionique solide 2 (conducteur par ion $O^{2-}$ ou $SO_4^{2-}$ ou $F^-$ par exemple) en contact à la fois d'une électrode de référence 3, d'une électrode poreuse 4 et du milieu à mesurer 6. Selon le type d'ion mobile dans l'électrolyte solide, la pile pourra mesurer dans un gaz la pression partielle de l'oxygène, de $SO_2$, du fluor ou du chlore. La tension entre les électrodes est fonction du rapport de l'activité qu'à l'ion dans le compartiment 6 sur celle qu'elle a dans l'électrode de référence 3. Cette tension crée un courant électrique parasite à travers l'alumine pouvant à plus ou moins long terme modifier l'activité électrochimique de l'ion dans l'électrode de référence. Pour éviter cette corrosion il est nécessaire d'utiliser des substrats possédant une résistivité électrique très importante à la température de travail.

L'alumine utilisée doit être très pure et posséder une très faible teneur en éléments alcalins. Cela peut être de l'alumine commerciale obtenue par calcination, toutefois il est préférable d'utiliser de l'alumine préparé par des voies sol-gel, ce procédé permettant d'avoir de l'alumine de haute pureté c'est-à-dire inférieure à 20ppm, ce qui est favorable.

Il est bien connu dans le procédé de l'art que les substrats émis sont formés en dispersant la poudre céramique dans des solvants organiques à l'aide d'un défloculant, en ajoutant un liant soluble dans ces solvants et, afin de donner à la feuille crue une certaine souplesse, en additionnant des plastifiants. Après coulage, par la méthode du doctor blade et séchage du solvant la feuille crue aura toutes les propriétés requises pour être manipulée, découpée, sérigraphiée sans dommage.

Il est important que les matières organiques se décomposent et se subliment avant la fermeture des pores. Aussi choisira-t-on des liants et des plastifiants à faible température de décomposition. Le liant préféré est le polyvinyl butyral, par exemple B98 qui est approximativement formé de 80 % mole d'acétal polyvipilique, 18-20 % mole d'alcool polyrivinylique et 0-2,5 % mole d'acétate polyvinylique. Naturellement, on peut utiliser d'autres liants par exemple l'acétate polyvinylique, le polyméthylméthaerylate, le polyvinyl formate, par exemple.

Typiquement, le liant est utilisé en combinaison avec des plastifiants comme le dioctyl phtalate, le dibutyl phtalate, le dipropylène glycol dibenzoate, etc. En poids le rapport liant sur plastifiant est généralement compris entre 10 et 4 le choix de ce rapport dépendra des qualités mécaniques de la feuille crue (elle doit pouvoir être facilement manipulable) et de facilité avec laquelle la barbotine est fabriquée et coulée.

Le défloculant doit être choisi de façon à ce qu'il ne laisse pas de trace après combustion. La plupart des défloculants sont formés d'une chaîne organique ayant une partie hydrophobe et une partie hydrophyle, cette dernière est le plus souvent formée d'un cation métallique lié à l'extrémité de la chaîne. Ce dernier type de défloculant, en raison des impuretés qu'ils amènent, est à éviter, on préférera les défloculants dans lesquels la partie hydrophyle est une double ou une triple liaison. On choisira par exemple le dial acétylénique par exemple. Surfynol 104 ou un ester ou encore des dérivés sulfonés éthyléniques.

Les solvants doivent être judicieusement choisis de façon à ce que le mélange dissolve les liants et plastifiants, que le défloculant joue son rôle avec le maximum d'efficacité, qu'il ne dissolve pas le support de coulage et enfin que leur évaporation soit telle qu'il ne se forme pas de peau. Typiquement les solvants sont le méthanol, l'éthanol, le toluène, les cétones... Le mélange préféré est l'alcool éthylique, le trichloréthylène et le cyclolexanone.

La barbotine qui est utilisée pour former la feuille crue de céramique est constituée des composants déjà cités, dans des proportions habituelles de l'art. Sans être limitatif, typiquement le rapport des poids alumine sur matières organiques est compris entre 1,5 et 2.

La feuille de céramique est coulée selon les procédures habituelles de l'art. On pourra se référer au brevet américain 3,780,150 (H.W Stetson et al).

Après découpage, les plaquettes de céramique sont frittés en suivant un cycle en température particulier. En effet il est nécessaire que tous les liants ne soient décomposés et sublimés avant la fermeture des pores. Ce traitement a pour but d'augmenter considérablement la résistance électrique en obligeant les impuretés se trouvant aux joints de grains à pénétrer à l'intérieur du réseau.

Dans la pratique on réalise une montée lente en température (environ 100°/h) jusqu'à une température de 600°C. Cette température est stabilisée au moins deux heures pour bien laisser le temps aux liants de s'évacuer, puis la température est augmentée à nouveau à une vitesse de 150°C/h jusqu'à la température de frittage. On fait alors subir au matériau un palier à cette température d'environ deux heures. Puis, selon l'invention on augmente encore la température d'environ cent degrés et on réalise un autre palier de façon à résorber les impuretés aux joints des grains.

La température de frittage dépend de la granulométrie de la poudre de départ mais, par exemple, pour une poudre possédant une taille moyenne de grain voisine de un micron, cette température sera de l'ordre de 1500°C. Typiquement pour une poudre de ce type, au bout de deux heures le retrait est terminé et la densité proche de la densité théorique c'est-à-dire 98 %.

Selon l'invention on prévoit néanmoins un recuit supplémentaire qui augmente la résistance électrique d'un facteur au moins égal à dix.

A la place d'un recuit à plus haute température, on peut bien entendu effectuer un recuit prolongé à la température de frittage ou à plus basse température.

A titre d'exemple, nous avons utilisé de la poudre d'alumine habituellement utilisée pour réaliser des substrats pour des applications en hyperfréquence (A16 Alcea). La taille moyenne des particules était de 0,6 micromètres.

Le liant utilisé était le polyvinyl butyral (Butva B98) mélangé à des plastifiants (Dibutyl phtolate et polyéthylène glycol) dans un rapport d'environ 1/2 en poids.

Les solvants étaient un mélange de trichloréthylène, d'alcool éthylique et de cyclohexanone.

L'alumine, le liant et les solvants dans les proportions en poids de 60/8/32 respectivement furent mélangés de façon conventionnelle dans un broyeur à boulets.

Une feuille de céramique en cru fut obtenue en utilisant la méthode du doctor blade.

La feuille crue fut alors séchée pendant vingt quatre heures à l'air ambiant sous hotte, avant d'être découpée dans les dimensions 140 x 140 mm.

Une première plaquette placée dans un four entre deux coverplates en alumine ultrapure a subi le traitement thermique suivant : montée en température jusqu'à 600°C à 100°C/h puis palier de deux heures à cette température, puis remontée jusqu'à la température de 1500°C, palier de deux heures à cette température puis enfin redescente jusqu'à la température ambiante à 150°C/h.

Une seconde plaquette placée de la même façon dans le four a subit le même traitement thermique mais avec, selon l'invention, en plus un recuit à 1600°C pendant une heure. Le procédé de l'invention est illustré par la courbe de la figure 3 où l'on voit les paliers de traitement thermiques à 600°C puis 1500°C ainsi que le palier de recuit final à 1600°C.

La résistivité de ces deux plaquettes a été mesurée en fonction de la température de l'ambiante jusqu'à 1000°C.

Les résultats des mesures ont permis de mettre en valeur que la résistivité a été augmentée d'un à deux ordres de grandeur selon le domaine de température.

## Revendications

1. Procédé de fabrication d'un substrat à forte résistivité comprenant les différentes étapes successives suivantes :
   – une première étape de découpage d'au moins une plaquette de matériau céramiques à base d'alumine ;
   – une deuxième étape de traitement thermique à une première température pour obtenir une évaporation du matériau liant ;
   – une troisième étape de recuit à une deuxième température supérieure à la première température pour obtenir un frittage conduisant à la densification du substrat ;
caractérisé en ce que ce procédé est prolongé par une quatrième étape d'un recuit supplémentaire réalisé à une troisième température supérieure à la deuxième température ayant pour effet d'augmenter la résistance électrique du substrat.

2. Procédé selon la revendication 1, caractérisé en ce qu'il comporte, avant la première étape, des étapes de mélange de la poudre d'alumine à un liant et des solvants, et de mise en forme de ce mélange en feuille de céramique crue.

3. Procédé selon la revendication 2, caractérisé en ce que les liants, les plastifiants et les défoulants sont des matériaux purement organiques.

## Patentansprüche

1. Verfahren zur Herstellung eines Substrats mit hohem spezifischen Widerstand, mit den verschiedenen, aufeinanderfolgenden, nachstehenden Prozeßschritten:
   – ein erster Schritt, in dem mindestens ein Plättchen aus keramischem, auf der Grundlage von Aluminiumoxid basierendem Material ausgestanzt wird;
   – ein zweiter Schritt, in dem eine thermische Behandlung mit einer ersten Temperatur erfolgt, um ein Verdampfen des Bindemittels zu erreichen;
   – ein dritter Schritt, in dem ein Ausglühen mit einer zweiten Temperatur, die höher als die erste Temperatur ist, erfolgt, um ein zur Verdichtung des Substrats führendes Sintern zu erreichen; dadurch gekennzeichnet, daß dieses Verfahren um einen vierten Prozeßschritt erweitert ist, in dem ein zusätzliches Ausglühen erfolgt, das bei einer dritten Temperatur, die höher als die zweite Temperatur ist, durchgeführt wird, um eine Erhöhung des elektrischen Widerstand des Substrats zu erreichen.

2. Verfahren nach Anspruch 1, dadurch gekennzeichnet, daß es vor dem ersten Schritt Prozeßschritte aufweist, in denen das Aluminiumoxidpulver mit einem Bindemittel und Lösungsmitteln gemischt und diese Mischung zu einer ungesinterten Keramikscheibe gepreßt wird.

3. Verfahren nach Anspruch 2, dadurch gekennzeichnet, daß die Bindemittel, die Weichmacher und die Pepisatoren aus rein organischen Stoffen bestehen.

## Claims

1. A process for the manufacture of a high resistivity substrate, comprising the following different stages:
   – a first stage of cutting out at least one alumina-based plate of ceramic material,
   – a second stage of heat treatment at a first temperature in order to cause evaporation of the binding agent,
   – and a third stage of heating at a second temperature above the first temperature in order to cause sintering leading to a compaction of the substrate,

characterized in that the process is extended by a fourth additional stage comprising supplementary heating performed at a third temperature above the second temperature and having the effect of augmenting the electrical resistance of the substrate.

2. The process as claimed in claim 1, characterized in that it comprises, prior to the first stage, stages for the mixing of the alumina with a binding agent and solvents, and putting said mixture in the form of a sheet of raw ceramic material.

3. The process as claimed in claim 2, characterized in that the binding agents, the plasticizers and the deflocculants are exclusively organic materials.

# FIG_1

# FIG_2

# FIG_3